# EUROPÄISCHE PATENTSCHRIFT

(11) **EP 1 780 086 B1**
(45) Veröffentlichungstag und Bekanntmachung des Hinweises auf die Patenterteilung: **31.03.2010**
(21) Anmeldenummer: 06018166.6
(22) Anmeldetag: 31.08.2006
(51) Int. Cl.: B60R 19/24

(54) **Vorrichtung zum lagegenauen Befestigen eines Stoßfängers**
Device for the exact positioning and fastening of a bumper
Dispositif pour fixer en position exacte un pare-chocs

(30) Priorität: 28.10.2005 DE 102005051662
(43) Veröffentlichungstag der Anmeldung: 02.05.2007
(73) Patentinhaber: Dr. Ing. h.c. F. Porsche AG, 70435 Stuttgart (DE)
(72) Erfinder: Keller, Markus, 71229 Leonberg (DE); Kruschhausen, Heinz-Arno, 75446 Wiernsheim (DE)

(56) Entgegenhaltungen:
- EP-A- 0 604 237
- DE-A1- 4 409 290
- DE-A1- 19 930 700
- GB-A- 2 281 260
- JP-A- 2000 247 196

## Beschreibung

Die Erfindung bezieht sich auf eine Vorrichtung zum lagegenauen Befestigen eines Stoßfängers nach dem Oberbegriff des Anspruchs 1.

Aus der EP 0 591 031 A1 ist ein System zur Befestigung eines Stoßfängers am Aufbau eines Kraftfahrzeugs bekannt, wobei der Stoßfänger Führungselemente aufweist, die in Trägerführungen rastend eingreifen.

Aufgabe der Erfindung ist es, eine Vorrichtung zum Befestigen eines Stoßfängers oder Bugteils eines Kraftfahrzeugs am Fahrzeugaufbau zu schaffen, mit der eine lagegenaue Anordnung zu weiteren ortsfesten Fahrzeugbauteilen, wie beispielsweise einem Scheinwerfer, möglich ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass der Stoßfänger in einer genauen definierten Position, d.h. auch mit einer definierten Fuge, zu angrenzenden Fahrzeugbauteilen, wie beispielsweise einem Scheinwerfer, angebaut werden kann. Dies erfolgt, indem mindestens ein Führungselement am Fahrzeugaufbau gehalten ist und Führungszapfen aufweist, die korrespondierend zu Führungszapfen-Aufnahmen im Stoßfänger oder im Bugteil angeordnet sind. Insbesondere sind im Stoßfänger oder Bugteil die Aufnahmen als vorstehende hülsenartige Teile ausgeformt und in einer etwa horizontalen Ebene mit den Führungszapfen angeordnet. Hierdurch wird in einfacher Weise erreicht, dass der Stoßfänger oder sonstige Anbauteile des Kraftfahrzeugs lagegenau zu weiteren Bauteilen der Karosserie, wie in diese Fall zum Scheinwerfer, angeordnet werden können, so dass eine gewünschte Fuge zwischen dem Scheinwerfer und dem Stoßfänger gebildet wird.

Des weiteren ist nach der Erfindung vorgesehen, dass das Führungselement einen Träger mit jeweils drei Führungszapfen umfasst, die vom Träger vorstehend ausgeführt sind und auf die die hülsenartigen Aufnahmen mitsamt dem Stoßfänger oder Bugteil aufschiebbar sind. Das Führungselement ist jedem Scheinwerfer des Fahrzeugs zugeordnet und umfasst zur Fixierung des Stoßfängers am Fahrzeugaufbau jeweils mindestens drei Führungszapfen. Hierdurch wird eine optimale Lagerung und Abstützung des Stoßfängers auf den Führungszapfen erzielt.

Ferner wird nach der Erfindung das Führungselement über Befestigungsmittel mit einem Montageelement in Höhenrichtung in einem Langloch als Toleranzausgleich verschiebbar gehalten, wobei die Führungszapfen im Querschnitt etwa rechteckförmig oder quadratisch ausgeführt sind und in Querrichtung ein seitliches Spiel zur korrespondierenden Aufnahme im Führungselement aufweisen. Hierdurch wird erfindungsgemäß eine Einstellung des Stoßfängers zu den Scheinwerfern durch eine Verstellung in Hochrichtung erleichtert.

Das Führungselement ist mit dem Fahrzeugaufbau über nach unten wegstehende Arme verbunden und unterhalb eines Scheinwerfers angeordnet und zwischen dem Scheinwerfer und dem Stoßfänger oder dem Bugteil ist eine definierte Fuge bildbar. Dies wird erreicht, indem der Stoßfänger oder das Bugteil auf den Führungszapfen des Führungselements in Querrichtungen verschiebbar gehalten und in Hochrichtungen das Führungselement im Verbindungspunkt über die Schrauben am Fahrzeugaufbau verstellbar ist.

Durch die jeweils mit Spiel in den Aufnahmen der Stoßfängers gehaltenen Führungszapfen ist es bei der Montage des Stoßfängers in einfacher Weise möglich, diesen zu den festen am Fahrzeugaufbau montierten Bauteilen, wie beispielsweise dem Scheinwerfer, genau zu positionieren und festzusetzen bzw. einen Toleranzausgleich zu schaffen.

Ein Ausführungsbeispiel der Erfindung ist in den Zeichnungen dargestellt und wird im folgenden näher beschrieben.

Es zeigen
- Fig. 1: eine schaubildliche Darstellung eines Fahrzeugbugs,
- Fig. 2: einen Schnitt nach der Linie ∥-∥ der Fig. 1 mit Stoßfänger sowie Aufnahmen und einem Führungselement mit Führungszapfen,
- Fig. 3: eine Ansicht auf das Führungselement entgegen der Fahrtrichtung F gesehen,
- Fig. 4: eine Draufsicht auf das Führungselement gemäß Fig. 3,
- Fig. 5: eine schaubildliche Darstellung des Führungselements mit montiertem Stoßfänger, und

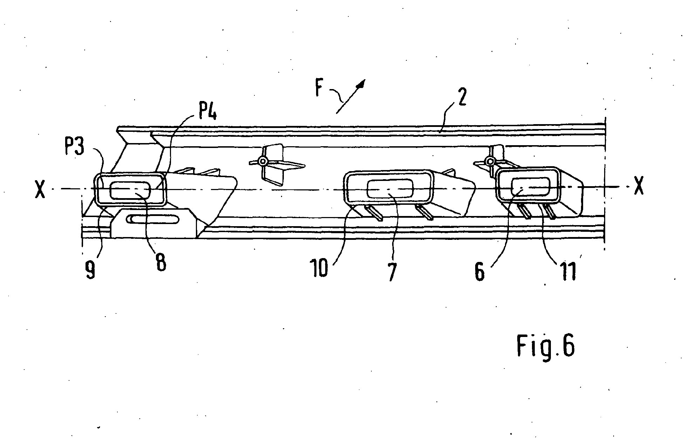

- Fig. 6: eine Ansicht auf die Führungszapfen-Aufnahmen im Stoßfänger.

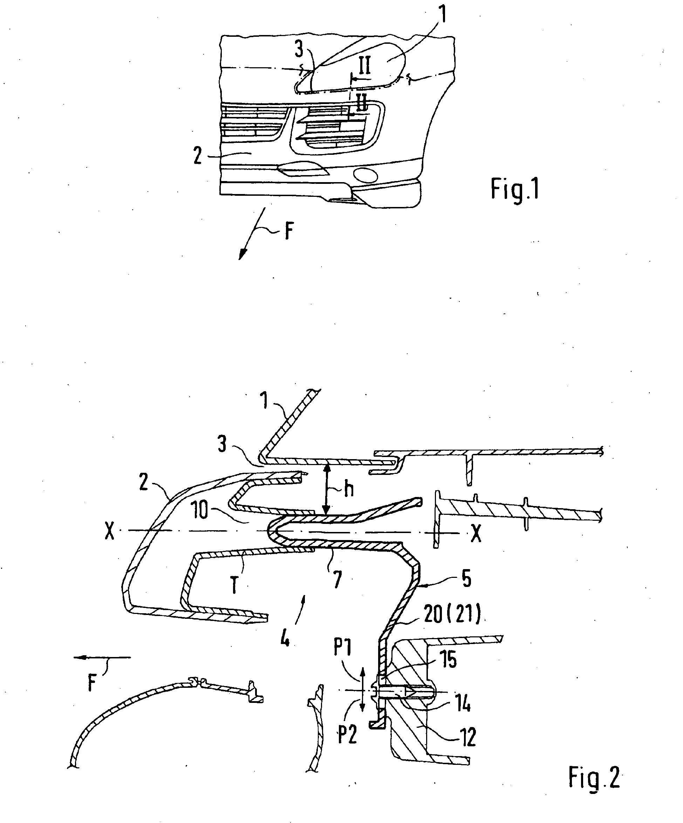

In Fig. 1 ist teilweise ein Bug eines Fahrzeugs mit Scheinwerfer 1 und Stoßfänger 2 bzw. Bugteil dargestellt. Der Stoßfänger 2 ist, wie strichpunktiert dargestellt, mit einer definierten Fuge 4 zum Scheinwerfer 1 hin versehen. Diese Fuge 4 ist mittels der erfindungsgemäßen Vorrichtung 5 einstellbar, welche im wesentlichen ein Führungselement 5 mit Führungszapfen 6, 7 und 8 sowie Führungszapfen-Aufnahmen 9, 10 und 11 umfasst.

Das Führungselement 5 ist am Fahrzeugaufbau an einem Montageelement 12 gehalten und die Führungszapfen 6, 7 und 8 ragen in Fahrtrichtung F und sind etwa in einer horizontalen Ebene X-X angeordnet. Die Führungszapfen (7, 8) sind rechteckförmig und/oder quadratisch im Querschnitt ausgeführt. Sie ragen in die korrespondierend angeordneten Aufnahmen 9, 10 und 11, die an der Innenseite des Stoßfängers 2 angeformt sind, hinein. Diese Aufnahmen 9, 10 und 11 ragen vorstehend von einer Stoßfängerwandung oder von einem eingesetzten Träger T des Stoßfängers vor und erstrecken sich ebenfalls in einer etwa horizontalen Ebene X-X.

Es sind bei der gezeigten Ausführung jeweils pro Führungselement 5, d.h. pro Fahrzeugseite, jeweils drei Führungszapfen 6, 7 und 8 vorgesehen, wobei die Anzahl je nach Bedarf ausgelegt wird, d.h. es können mehr oder weniger Führungszapfen verwendet werden. Entsprechend der Anzahl der Führungszapfen sind Führungszapfen-Aufnahmen 9, 10, 11 vorgesehen. Das Führungselement 5 bzw. der Träger ist über Befestigungsmittel 14 am ortsfesten Montageelement 12 in einem vertikalen Längsschlitz 15 des Elements 12 gehalten. Hierdurch ist eine Höhenverstellung des Führungselements 5 in Pfeilrichtungen P1 und P2 möglich, so dass sich das Maß h verändern kann und somit auch die Fuge 3 zwischen Stoßfänger 2 und Scheinwerfer 1.

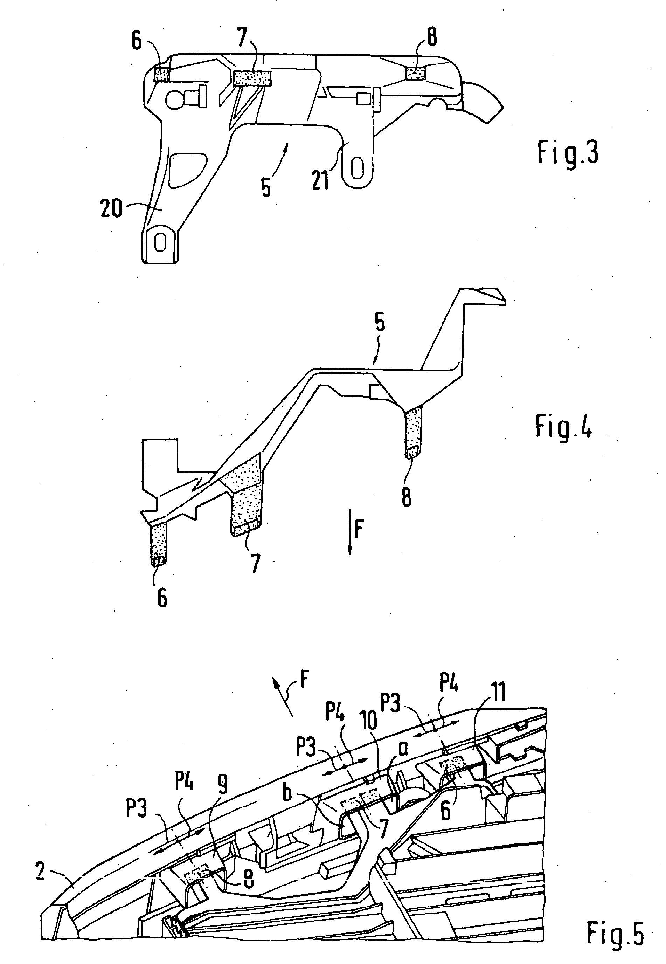

Die Führungszapfen 6, 7 und 8 sind in den hiermit korrespondierenden Aufnahmen 9, 10 und 11 des Stoßfängers 2 mit seitlichem Spiel a und b gehalten, so dass eine Einstellung in Querrichtungen P3 und P4 möglich ist, wie Fig. 5 näher zeigt.

Das Führungselement 5 ist über vom Grundkörper sich nach unten weg erstreckenden Armen 20, 21 mit dem Montageelement 5 über die Schrauben 14 verbunden, wobei die Führungszapfen 6, 7 und 8 jeweils unterhalb des Scheinwerfers 1 angeordnet sind.

Zum Montieren des Stoßfängers 2 wird dieser mit den Aufnahmen 9, 10 und 11 auf die Führungszapfen 8, 7 und 6 gesteckt bzw. werden die Zapfen 8, 7 und 6 in die Aufnahmen 9, 10 und 11 gesteckt und dann entsprechend nach dem Einstellen einer optimalen Fuge 3 zum Scheinwerfer 1 hin mit der Karosserie des Fahrzeugs verbunden.

## Patentansprüche

1. Anspruch 1 Kraftfahrzeug mit einem Stossfänger oder Bugteil, einem Fahrzeugaufbau und einer Vorrichtung zum lagegenauen Befestigen des Stossfängers oder des Bugteils mit dem Fahrzeugaufbau mittels eines Führungselements, wobei mindestens ein Führungselement (5) am Fahrzeugaufbau gehalten ist und Führungszapfen (6, 7 und 8) aufweist, die korrespondierend zu Führungszapfen-Aufnahmen (9, 10 und 11) im Stossfänger (2) oder Bugteil angeordnet sind, **dadurch gekennzeichnet, dass** im Stoßfänger (2) oder Bugteil die Aufnahmen (9, 10 und 11) als vorstehende hülsenartige Teile ausgeformt und in einer etwa horizontalen Ebene (X-X) angeordnet sind.

2. Vorrichtung nach Anspruch 1, **dadurch gekennzeichnet, dass** das Führungselement (5) einen Träger mit jeweils drei Führungszapfen (6, 7, 8) umfasst, die vom Träger vorstehend ausgeführt sind und auf die die hülsenartigen Führungszapfen-Aufnahmen (9, 10 und 11) mitsamt dem Stoßfänger (2) oder Bugteil aufschiebbar sind.

3. Vorrichtung nach einem der vorhergehenden Ansprüche, **dadurch gekennzeichnet, dass** das Führungselement (5) über Befestigungsmittel (14) auf einem Montageelement (12) in Höhenrichtung (P1 und P2) in einem Langloch (15) als Toleranzausgleich verschiebbar gehalten ist.

4. Vorrichtung nach einem der vorhergehenden Ansprüche, **dadurch gekennzeichnet, dass** die Führungszapfen (6, 7, 8) im Querschnitt etwa rechteckförmig oder quadratisch ausgeführt sind und in Querrichtungen (P3 und P4) ein seitliches Spiel (a und b) zur korrespondierenden Aufnahme im Führungselement (5) aufweisen.

5. Vorrichtung nach einem der vorhergehenden Ansprüche, **dadurch gekennzeichnet, dass** das Führungselement (5) mit dem Fahrzeugaufbau über nach unten wegstehende Arme (20, 21) verbunden und unterhalb eines Scheinwerfers (1) angeordnet ist und zwischen dem Scheinwerfer (1) und dem Stoßfänger (2) oder dem Bugteil eine definierte Fuge (3) bildbar ist.

6. Vorrichtung nach einem der vorhergehenden Ansprüche, **dadurch gekennzeichnet, dass** der Stoßfänger (2) oder das Bugteil auf den Führungszapfen (6, 7, 8) des Führungselements (5) in Querrichtungen (Pfeilrichtung P3 und P4) verschiebbar gehalten und in Hochrichtungen (Pfeilrichtung P1 und P2) das Führungselement (5) im Verbindungspunkt über die Schrauben (14) im Langloch (15) am Fahrzeugaufbau verstellbar gehalten ist.

## Claims

1. Motor vehicle having a bumper or front-end part, having a vehicle body and having a device for the exact positioning and fastening of the bumper or front-end part to the vehicle body by means of a guide element, with at least one guide element (5) being held on the vehicle body and having guide pegs (6, 7 and 8) which are arranged correspondingly to guide peg receptacles (9, 10 and 11) in the bumper (2) or front-end part, **characterized in that** the receptacles (9, 10 and 11) are formed as projecting sleeve-like parts, and are arranged in an approximately horizontal plane (X-X), in the bumper (2) or front-end part.

2. Device according to Claim 1, **characterized in that** the guide element (5) comprises a beam with in each case three guide pegs (6, 7, 8) which are formed so as to project from the beam and onto which the sleeve-like guide peg receptacles (9, 10 and 11) together with the bumper (2) or front-end part can be pushed.

3. Device according to one of the preceding claims, **characterized in that** the guide element (5) is held by fastening means (14) on a mounting element (12) movably in the vertical direction (P1 and P2) in a slot (15) for tolerance compensation.

4. Device according to one of the preceding claims, **characterized in that** the guide pegs (6, 7, 8) are approximately rectangular or square in cross section and, in transverse directions (P3 and P4), have lateral play (a and b) with respect to the corresponding receptacle in the guide element (5).

5. Device according to one of the preceding claims, **characterized in that** the guide element (5) is connected to the vehicle body by means of downwardly projecting arms (20, 21) and is arranged below a headlamp (1) and a defined gap (3) can be formed between the headlamp (1) and the bumper (2) or front-end part.

6. Device according to one of the preceding claims, **characterized in that** the bumper (2) or front-end part is held on the guide pegs (6, 7, 8) of the guide element (5) so as to be movable in transverse directions (arrow direction P3 and P4) and the guide element (5) is held on the vehicle body, so as to be adjustable in vertical directions (arrow direction P1 and P2), at the connecting point by means of the screws (14) in the slot (15).

## Revendications

1. Véhicule automobile comprenant un pare-chocs ou une partie avant, une carrosserie de véhicule et un dispositif pour la fixation en position exacte du pare-chocs ou de la partie avant à la carrosserie du véhicule au moyen d'un élément de guidage, au moins un élément de guidage (5) étant fixé à la carrosserie du véhicule et présentant des tourillons de guidage (6, 7 et 8), qui sont disposés de manière correspondant à des logements pour tourillons de guidage (9, 10 et 11) dans le pare-chocs (2) ou la partie avant, **caractérisé en ce que** les logements (9, 10 et 11) sont formés dans le pare-chocs (2) ou la partie avant sous forme de pièces en forme de douilles saillantes et sont disposés dans un plan approximativement horizontal (X-X).

2. Dispositif selon la revendication 1, **caractérisé en ce que** l'élément de guidage (5) comprend un support avec trois tourillons de guidage respectifs (6, 7, 8), qui sont réalisés en saillie depuis le support et sur lesquels les logements pour tourillons de guidage en forme de douilles (9, 10 et 11) peuvent être poussés conjointement avec le pare-chocs (2) ou la partie avant.

3. Dispositif selon l'une quelconque des revendications précédentes, **caractérisé en ce que** l'élément de guidage (5) est maintenu de manière déplaçable dans la direction en hauteur (P1 et P2) dans un trou oblong (15) en tant que compensation des tolérances par le biais de moyens de fixation (14) sur un élément de montage (12).

4. Dispositif selon l'une quelconque des revendications précédentes, **caractérisé en ce que** les tourillons de guidage (6, 7, 8) sont réalisés en section transversale approximativement sous forme rectangulaire ou carrée et présentent dans les directions transversales (P3 et P4) un jeu latéral (a et b) par rapport au logement correspondant dans l'élément de guidage (5).

5. Dispositif selon l'une quelconque des revendications précédentes, **caractérisé en ce que** l'élément de guidage (5) est connecté à la carrosserie du véhicule par le biais de bras (20, 21) saillant vers le bas et est disposé sous un phare (1) et un joint défini (3) peut être formé entre le phare (1) et le pare-chocs (2) ou la partie avant.

6. Dispositif selon l'une quelconque des revendications précédentes, **caractérisé en ce que** le pare-chocs (2) ou la partie avant est maintenu de manière déplaçable dans des directions transversales (direction des flèches P3 et P4) sur les tourillons de guidage (6, 7, 8) de l'élément de guidage (5) et l'élément de guidage (5) est maintenu de manière déplaçable dans les directions en hauteur (direction des flèches P1 et P2) au point de connexion par le biais des vis (14) dans le trou oblong (15) sur la carrosserie du véhicule.
